# EUROPEAN PATENT APPLICATION

(11) **EP 1 619 894 A1**
(43) Date of publication of application: **25.01.2006**
(21) Application number: 04027985.3
(22) Date of filing: 25.11.2004
(51) Int. Cl.: H04N 7/088, H04N 7/025

(54) **Digital broadcast receiving apparatus**

(30) Priority: 21.07.2004 JP 2004213312
(71) Applicant: KABUSHIKI KAISHA TOSHIBA, Tokyo 105-8001 (JP)
(72) Inventor: Ui, Shunji c/o Intellectual Property Division,, Minato-ku Tokyo 105-8001 (JP)
(74) Representative: HOFFMANN EITLE

(57) **Abstract**

A digital broadcast receiving apparatus, characterized by comprises a receiving and selecting unit (3) which receives and selects a digital broadcast wave, an acquisition unit (4, 8) which decodes a data broadcast stream included in the received and selected digital broadcast wave and acquiring character data and image data for data broadcast, a memory unit (22) which stores graphics patterns and reading data of the graphics patterns, a unit (23) which collates the acquired image data with information stored in the storage memory (22) and retrieves reading data of graphics patterns included in the image data, a unit (24) which creates sentence data for voice reading based on the acquired character data and the retrieved reading data, and a unit (25) which converts the created sentence data into voice data.

## Description

The present invention relates to a digital broadcast receiving apparatus having a function of receiving data broadcast.

In prior art digital TV broadcast, a transmitting station transmits data for displaying news, weather forecasts, etc. on a monitor in accordance with a user's operation, except for video and voice data. The transmitting station transmits data broadcast. This technology is disclosed in, for example, Jpn. Pat. Appln. KOKAI Publication No. 10-304325.

The data broadcast can be received by a vehicle-mounted broadcast receiving apparatus as well as a home broadcast receiving apparatus. The data broadcast is predicted on that data is displayed on the monitor screen of the apparatus; therefore, when a user cannot see the monitor screen while he or she is driving, he or she cannot understand the contents of the data broadcast.

In order to resolve the above problem and allow a user to understand information displayed on the monitor screen without seeing the screen, there is a method of converting character data included in information received from a broadcast station into voice data and outputting the voice data.

There is a case where the foregoing data broadcast includes not only character data but also data such as an image representing a new title logotype and a weather mark representing "fair." In this case, the title of news or the contents of weather forecasts are converted into voice data in the above method of converting character data into voice data. It is thus impossible for a user to understand the contents of data broadcast sufficiently without seeing any monitor screen.

An object of the present invention is to provide a digital broadcast receiving apparatus that allows a user to understand the contents of data broadcast sufficiently without seeing the monitor screen of the apparatus.

According to an embodiment of the present invention, a digital broadcast receiving apparatus, characterized by comprises a receiving and selecting unit which receives and selects a digital broadcast wave, an acquisition unit which decodes a data broadcast stream included in the received and selected digital broadcast wave and acquiring character data and image data for data broadcast, a memory unit which stores graphics patterns and reading data of the graphics patterns, a unit which collates the acquired image data with information stored in the storage memory and retrieves reading data of graphics patterns included in the image data, a unit which creates sentence data for voice reading based on the acquired character data and the retrieved reading data, and a unit which converts the created sentence data into voice data.

According to an embodiment of the present invention, a digital broadcast receiving apparatus, characterized by comprises a receiving and selecting unit which receives and selects a digital broadcast wave, a unit which decodes a data broadcast stream included in the received and selected digital broadcast wave and acquiring character data for data broadcast, a unit which creates sentence data for voice reading based on the acquired character data, and a unit which converts the created sentence data into voice data.

According to an embodiment of the present invention, a digital broadcast receiving apparatus, characterized by comprises a receiving and selecting unit which receives and selects a digital broadcast wave, a unit which decodes a data broadcast stream included in the received and selected digital broadcast wave and forms an image of an entire output screen of data broadcast, a memory unit which stores graphics patterns and reading data of the graphics patterns, a unit which collates the formed image with information stored in the memory unit and retrieves reading data of graphics patterns included in the formed image data, a unit which creates sentence data for voice reading based on the retrieved reading data, and a unit which converts the created sentence data into voice data.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing a configuration of a vehicle-mounted broadcast receiving apparatus according to the first embodiment of the present invention;
FIG. 2 is a chart showing an example of a data broadcast stream displayed on a monitor;
FIG. 3 is a chart showing an example of descriptions of a BML file;
FIG. 4 is a chart showing an example of descriptions of a binary table file;
FIG. 5 is a chart showing an example of a first definition file of a graphics recognition dictionary stored in the character recognition dictionary memory 22 of the vehicle-mounted broadcast receiving apparatus according to the first embodiment of the present invention;
FIG. 6 is a chart showing an example of a second definition file of the graphics recognition dictionary stored in the character recognition dictionary memory 22 of the vehicle-mounted broadcast receiving apparatus according to the first embodiment of the present invention;
FIG. 7 is a chart showing an example of a text file that describes character data included in a data broadcast stream and reading data of graphics patterns;
FIG. 8 is a chart showing in the form of characters the contents of voice data generated by the voice synthesis unit 25 of the vehicle-mounted broadcast receiving apparatus according to the first embodiment of the present invention;
FIG. 9 is a block diagram showing a configuration of a vehicle-mounted broadcast receiving apparatus according to the second embodiment of the present invention;
FIG. 10 is a chart showing an example of a text file that describes the character data acquired by the reading sentence creation unit 24 of the vehicle-mounted broadcast receiving apparatus according to the second embodiment of the present invention;
FIG. 11 is a chart showing in the form of characters the contents of voice data read by the voice synthesis unit 25 of the vehicle-mounted broadcast receiving apparatus according to the second embodiment of the present invention;
FIG. 12 is a block diagram showing a configuration of a vehicle-mounted broadcast receiving apparatus according to the third embodiment of the present invention;
FIG. 13 is a chart showing an example of a first display screen displayed on the display unit 11 of the vehicle-mounted broadcast receiving apparatus;
FIG. 14 is a chart showing an example of a text file that describes voice-readable information in the first display screen which is acquired by the reading sentence creation unit 24 of the vehicle-mounted broadcast receiving apparatus;
FIG. 15 is a chart showing an example of the second display screen displayed on the display unit 11 of the vehicle-mounted broadcast receiving apparatus according to the fourth embodiment;
FIG. 16 is a chart showing an example of a text file that describes voice-readable information in the second display screen which is acquired by the reading sentence creation unit 24 of the vehicle-mounted broadcast receiving apparatus; and
FIG. 17 is a chart showing in the form of characters the contents of voice data generated by the voice synthesis unit 25 of the vehicle-mounted broadcast receiving apparatus according to the fourth embodiment of the present invention.

Embodiments of the present invention will be described below with reference to the accompanying drawings.

### (First Embodiment)

A first embodiment of the present invention will now be described.

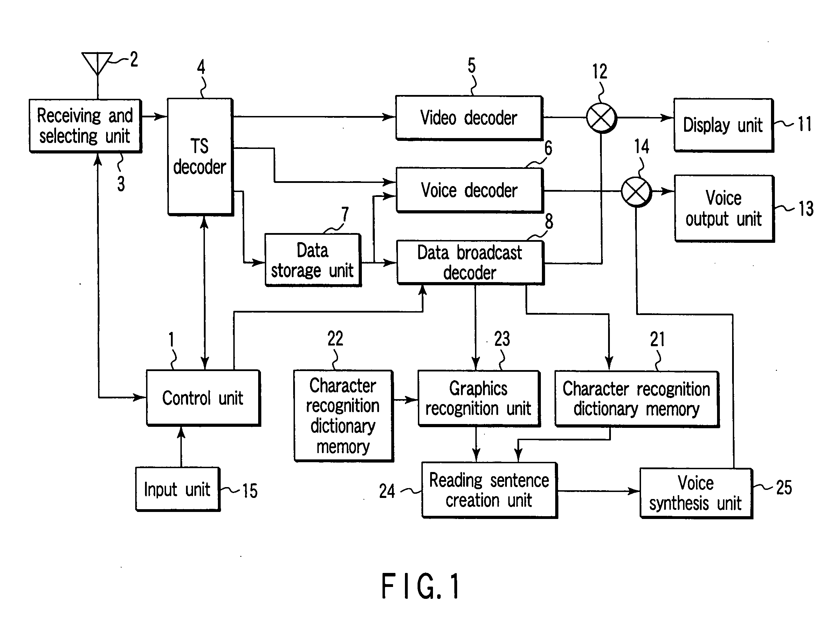

FIG. 1 is a block diagram showing a configuration of a vehicle-mounted broadcast receiving apparatus according to the first embodiment of the present invention.

The vehicle-mounted broadcast receiving apparatus includes a control unit 1 that controls the entire operation of the apparatus. The apparatus also includes a television (TV) antenna 2, a TV channel selection unit 3 and a transport stream (TS) decoder 4.

The TV channel selection unit 3 selects a radio wave of a preselected TV broadcast station from the radio waves of, e.g., terrestrial digital TV broadcast, which are received by the TV antenna 2. The TS decoder 4 separates a signal (MPEG2 transport stream), which is generated by demodulating the selected radio wave, into a video stream, a voice stream and a data broadcast stream.

The vehicle-mounted broadcast receiving apparatus also includes a video decoder 5, a voice decoder 6, a data storage unit 7 and a data broadcast decoder 8.

The video decoder 5 decodes the video stream and outputs the decoded video stream. The voice decoder 6 decodes the voice stream and outputs the decoded voice stream. The data storage unit 7 stores the data broadcast stream. The data broadcast decoder 8 decodes the data broadcast stream stored in the data storage unit 7 under the control of the control unit 1, and outputs the decoded data broadcast stream.

The vehicle-mounted broadcast receiving apparatus also includes a display unit (monitor) 11, a video synthesis unit 12, a voice output unit (speaker) 13, a voice mixing unit 14 and an input unit 15.

The video synthesis unit 12 synthesizes signals supplied from the video decoder 5 or the like, or selects a signal to be output to the display unit 11. The voice mixing unit 14 mixes signals supplied from the voice decoder 6 or the like at a predetermined ratio and selects a signal to be output to the voice output unit 13. The input unit 15 includes various keys and operating switches.

If the data broadcast stream stored in the data storage unit 7 includes a data broadcast voice stream such as background music (BGM), the stream is supplied to the voice decoder 6 and decoded therein.

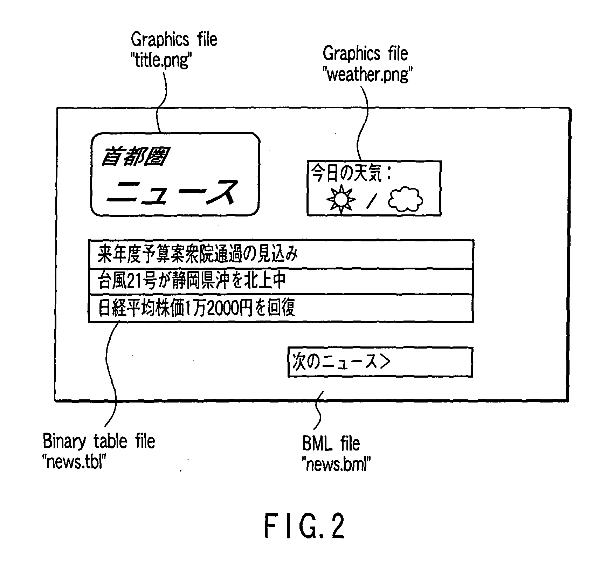

FIG. 2 is a chart showing an example of a data broadcast stream displayed on a monitor.

The data broadcast stream read out of the data storage unit 7 by the data broadcast decoder 8 includes a broadcasting markup language (BML) file, a binary table file and a graphics file. The BML file describes positional information of character data, image data, etc. on the screen (see FIG. 2) displayed on the display unit 11. The binary table file defines character data to be displayed on the display unit 11. The graphics file represents image data to be displayed on the display unit 11.

In the example of FIG. 2, the news and a weather forecast are displayed on the monitor. These displayed contents are controlled by the data broadcast decoder 8 based on a BML file (file name: "news.bml"), a binary table file (file name: "news.tbl") that defines character data of the text of the news, a graphics file (file name: "title.png") that represents image data of a news title logotype, and a graphics file (file name: "weather.png") that represents image data of weather.

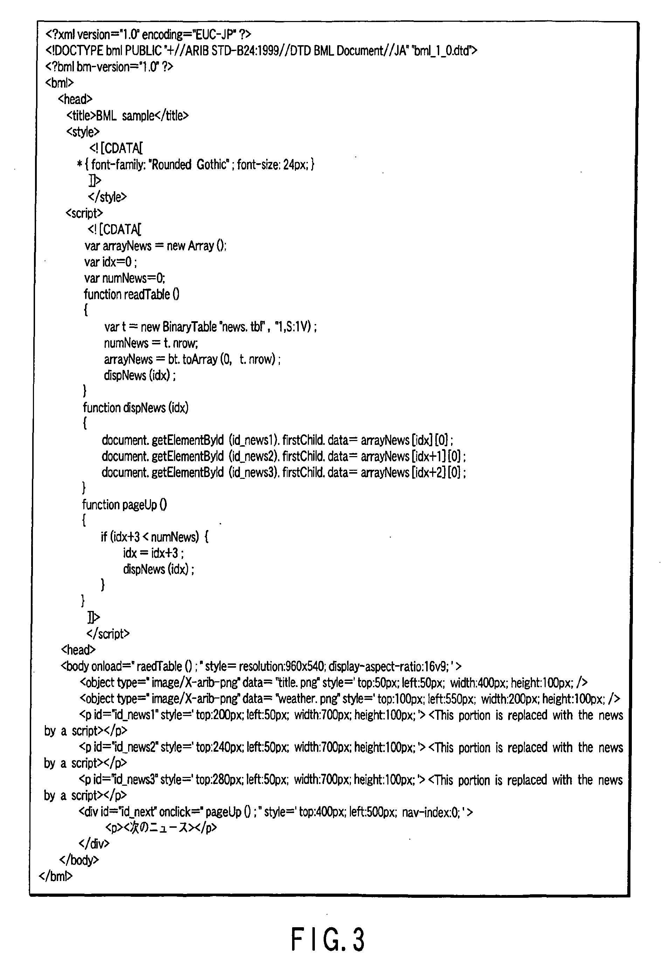

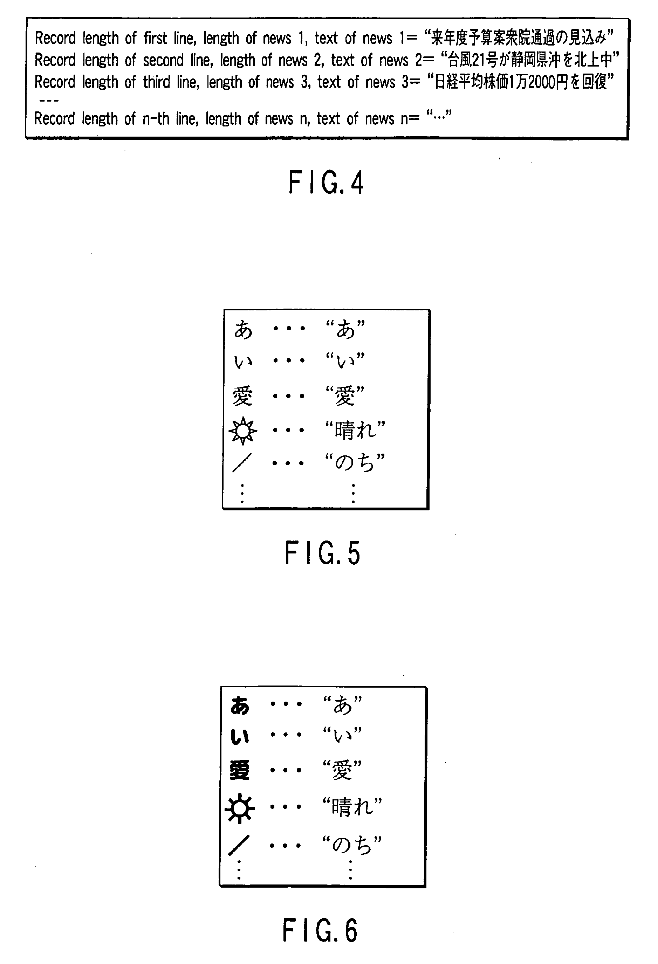

FIG. 3 is a chart showing an example of descriptions of a BML file. This BML file is one with the foregoing file name "news.bml". FIG. 4 is a chart showing an example of descriptions of a binary table file. This binary table file is one with the foregoing file name "news.tbl".

The BML file shown in FIG. 3 describes the read (readTable ()), display (dispNews) and page updating (pageUp ()) of the character data defined in the binary table file (see FIG. 4) by scripts. It also describes the display position of character data defined in the binary table file and that of image data represented by the graphics file.

The data broadcast decoder 8 executes the scripts in the BML file shown in FIG. 3 to overwrite (update) the description "This portion is replaced with the news by a script" in the BML file with three items of character data (news) defined by the binary table file shown in FIG. 4, " 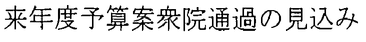 (The House of Representatives will pass the budget for next year)", " 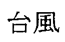 2 1 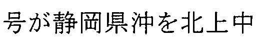 (Typhoon No. 21 is moving north off the coast of Shizuoka Prefecture)" and " 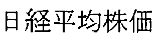 1 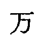 2 0 0 0 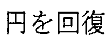 (The Nikkei Stock Average returns to 12,000 yen)". These three items of news are therefore output to the display unit 11.

The BML file shown in FIG. 3 includes a description to display character data " 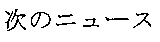 (next news)" on the monitor. Assume that a user selects the " 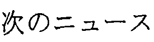 " displayed on the display unit 11 through the input unit 15 when the number of lines of character data defined by the binary table file exceeds that of lines of character data that can be stored in the BML file. The above three items of character data (news) in the BML file are overwritten with character data for three lines, which is included in the character data defined by the binary table file (see FIG. 4) and not displayed on the monitor. Thus, the main bodies of the news displayed on the display unit 11 are updated.

The vehicle-mounted broadcast receiving apparatus shown in FIG. 1 also includes a reading element extraction unit 21, a character recognition dictionary memory 22, a graphics recognition unit 23, a reading sentence creation unit 24 for creating sentence data for voice reading, and a voice synthesis unit 25 for converting the sentence data into voice data.

The above data broadcast decoder 8 has a function of supplying the reading element extraction unit 21 with a binary table file included in the data broadcast stream read out of the data storage unit 7 and a function of supplying the graphics recognition unit 23 with a graphics file included in the data broadcast stream.

The reading element extraction unit 21 has a function of extracting character data to be displayed on the monitor, for each line from the binary table file output from the data broadcast decoder 8 and a function of extracting character data described directly in the BML file.

The character recognition dictionary memory 22 stores different definition files of a character recognition dictionary. The character recognition dictionary stores graphics patterns of hiragana, katakana, kanji, numerals, alphabets, other special characters and symbols and their corresponding reading data. Hereinafter, the hiragana, katakana, kanji, numerals, alphabets, and special characters are simply referred to as characters. The symbols include parentheses, unit symbols, technical symbols, pictographs, and various marks.

FIG. 5 is a chart showing an example of a first definition file of a graphics recognition dictionary stored in the character recognition dictionary memory 22 of the vehicle-mounted broadcast receiving apparatus according to the first embodiment of the present invention. FIG. 6 is a chart showing an example of a second definition file of the graphics recognition dictionary stored in the character recognition dictionary memory 22 of the vehicle-mounted broadcast receiving apparatus according to the first embodiment of the present invention.

In the first and second definition files shown in FIGS. 5 and 6, for example, the graphics pattern representing hiragana " 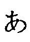 " corresponds to reading data " 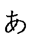 " and the graphics pattern representing the symbol of fair weather corresponds to reading data " 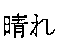 ".

The first and second definition files differ from each other in the display form of graphics patterns corresponding to reading data, or the font of characters and the design of symbols in the graphics patterns. For example, the graphics patterns " 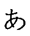 " and " 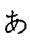 " having the same meaning are stored in the first and second definition files; however, they differ in font.

The reason these different definition files are provided is that the font of characters and the design of symbols in the graphics pattern included in the images represented by the graphics files output from the data broadcast decoder 8 vary from broadcast station to broadcast station or from program to program. The character recognition dictionary memory 22 can store a definition file corresponding to a graphics pattern of other character fonts and symbol designs as well as the first and second definition files described above.

The graphics recognition unit 23 has a function of collating an image represented by the graphics file output from the data broadcast decoder 8 with the definition files of the graphics recognition dictionary to retrieve reading data of each of graphics patterns included in the image. An example of retrieving the reading data is as follows. The graphics recognition unit 23 extracts the graphics patterns of characters and symbols included in the image based on the color and tone of the image, and collates the extracted graphics patterns with those defined by the first and second definition files of the graphics recognition dictionary shown in FIGS. 5 and 6, thereby to read out reading data corresponding to graphics patterns that coincide with the extracted graphics patterns.

When it turns out that the graphics patterns included in the image represented by the graphics file output from the data broadcast decoder 8 are limited to the graphics patterns defined by the first definition file of the graphics recognition dictionary shown in FIG. 5, the graphics recognition unit 23 collates the former graphics patterns with the latter graphics patterns only and not with those defined by other graphics recognition dictionaries. Accordingly, the read speed and read accuracy of reading data can be improved.

The reading sentence creation unit 24 has a function of creating sentence data for voice reading based on character data extracted from the reading element extraction unit 21 and reading data of each of the graphics patterns retrieved by the graphics recognition unit 23. The voice synthesis unit 25 has a function of converting the sentence data into voice data.

An operation of the vehicle-mounted broadcast receiving apparatus shown in FIG. 1 will be described.

When a user operates the input unit 15 to set the apparatus in a voice reading mode and not to display or output normal video and voice data or data broadcast data, the control unit 1 controls the data broadcast decoder 8 in the following manner. The reading element extraction unit 21 is supplied with the BML file "news.bml" (see FIG. 3) and binary table file "news.tbl" (see FIG. 4) both included in the data broadcast stream stored in the data storage unit 7, and the graphics recognition unit 23 is supplied with a graphics image (see FIG. 5) that is formed by decoding the BML file "news. bml" and graphics files "title.png" and "weather. png".

Upon receiving the binary table file "news.tbl" from the data broadcast decoder 8, the reading element extraction unit 21 extracts respective items of character data included in the binary table file, i.e., " 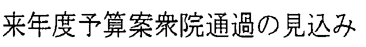 (The House of Representatives will pass the budget for next year)", " 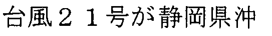 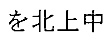 (Typhoon No. 21 is moving north off the coast of Shizuoka Prefecture)" and " 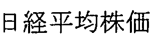 1 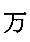 2 0 0 0 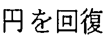 (The Nikkei Stock Average returns to 12,000 yen)" and also extracts character data described directly in the BML file "news.bml", i.e., " 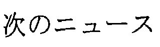 > (next news >)".

Upon receiving the BML file "news.bml" from the data broadcast decoder 8, the reading element extraction unit 21 acquires positional information of character data included in the BML file on the monitor, and outputs the positional information and the above character data to the reading sentence creation unit 24.

Upon receiving the graphics files "title.png" and "weather.png" from the data broadcast decoder 8, the graphics recognition unit 23 extracts graphics patterns from the images represented by the graphics files.

For example, the graphics patterns included in the image represented by the graphics file "title.png" are 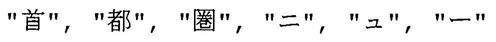 and 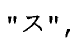 and the graphics patterns included in the image represented by the graphics file "weather.png" are " 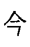 ", " 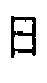 ", " 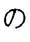 ", " 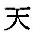 ", " 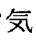 ", ":", " (fair weather mark)", "/" and "(cloudy weather mark)".

The graphics recognition unit 23 collates the respective graphics patterns extracted as described above with the first and second definition files of the graphics recognition dictionary shown in FIGS. 5 and 6 to retrieve reading data of the graphics patterns included in the images represented by the graphics files "title.png" and "weather.png".

The reading data items retrieved from the graphics file "title.png" by the graphics recognition unit 23 are 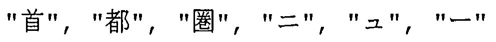 and " 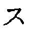 ". These items are combined into a phrase " 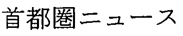 (Tokyo Metropolitan News)" that can suitably be pronounced. The reading data items retrieved from the graphics file "weather.png" are combined into a phrase " 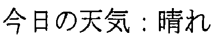 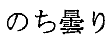 (Today's Weather: Fair, Later Cloudy)" that can suitably be pronounced. These reading data items are combined in consideration of the relationship between adjacent graphics patterns.

Upon receiving the BML file "news.bml" from the data broadcast decoder 8, the graphics recognition unit 23 acquires positional information of respective graphics files included in the BML file on the monitor, and outputs the positional information and the above retrieved reading data to the reading sentence creation unit 24.

The reading sentence creation unit 24 acquires the character data extracted by the reading element extraction unit 21 and its positional information. The unit 24 also acquires the reading data of each of the graphics patterns retrieved by the graphics recognition unit 23 and the positional information of each of the graphics files. The unit 24 creates a text file that describes these acquired data and information.

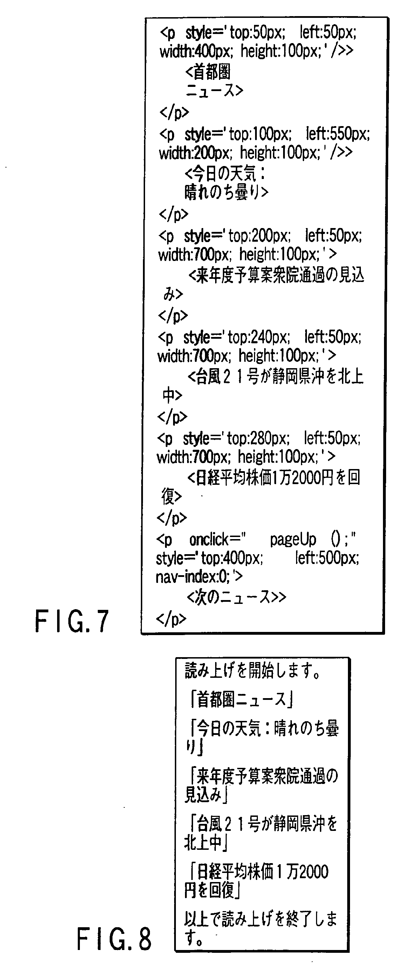

FIG. 7 is a chart showing an example of a text file that describes character data included in a data broadcast stream and reading data of graphics patterns.

The text file shown in FIG. 7 includes the title of news, a weather forecast and the contents of the text of the news displayed on the monitor display screen shown in FIG. 2. Of the character data described in the text file shown in FIG. 7, " 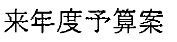 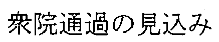 (The House of Representatives will pass the budget for next year)", " 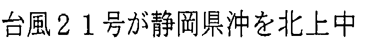 (Typhoon No. 21 is moving north off the coast of Shizuoka Prefecture)" and " 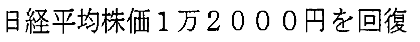 (The Nikkei Stock Average returns to 12,000 yen)" are character data included in the binary table file output from the data broadcast decoder 8 and corresponding to the text of the news.

" 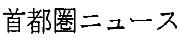 (Tokyo Metropolitan News)" described in the text file shown in FIG. 7 is reading data of graphics patterns included in an image represented by the graphics file "title.png" output from the data broadcast decoder 8. " 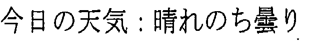 (Today's Weather: Clear, Later Cloudy " described in the text file shown in FIG. 7 is reading data of graphics patterns included in an image represented by the graphics file "weather.png" output from the data broadcast decoder 8.

The text file shown in FIG. 7 describes the display positions of the character data and graphics files, which are elements of the screen. The reading sentence creation unit 24 arranges the reading data of the character data and graphics files described in the text file from the upper left to the lower right on the screen in accordance with the descriptions of the display positions in the text file to thereby create sentence data for voice reading. However, the reading sentence creation unit 24 does not include " 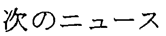 > (next news >)" in the sentence data for voice reading.

The voice synthesis unit 25 converts the sentence data into voice data and supplies a signal indicative of the voice data to the voice mixing unit 14. The unit 25 stores in advance voice data corresponding to a message " 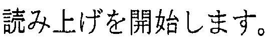 . (We start reading.)" and voice data corresponding to a message " 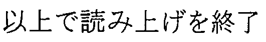 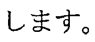 (We finish reading.)" More specifically, a message " 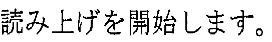 (We start reading.)" is first output from the voice output unit 13, then, voice data is generated on the basis of sentence data created according to the contents of the text file shown in FIG. 7, and finally a message " 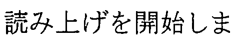 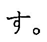 (We start reading.)" is output from the voice output unit 13.

The voice mixing unit 14 mixes a signal from the voice synthesis unit 25 and a signal from the voice decoder 6 at a predetermined ratio and outputs the mixed signal to the voice output unit 13. This ratio can be set at any value through the operation of the input unit 15. FIG. 8 is a chart showing in the form of characters the contents of voice data generated by the voice synthesis unit 25 of the vehicle-mounted broadcast receiving apparatus according to the first embodiment of the present invention.

As described above, even when character data included in data broadcast is converted into voice and the voice is output and a graphics file is included in a data broadcast stream, a graphics pattern is extracted from the image represented by the graphics file, the reading data of the graphics pattern is retrieved and converted into character data and voice data, and the character data and voice data are output. A user can thus understand the contents of data broadcast sufficiently without seeing the monitor screen even though information indicating a news title, a weather forecast, etc. is included in the images represented by the graphics files.

The first embodiment has been described as being applied to a vehicle-mounted broadcast receiving apparatus. The first embodiment is not limited to this but can be applied to a stay-at-home broadcast receiving apparatus if it has a function of receiving data broadcast.

When voice synthesizing phonetic data, or reading data of character data in the binary file included in a data broadcast stream and reading data of different graphics patterns in the graphics files are described in the binary file of the data broadcast stream or another data file by a broadcast station, the reading element extraction unit 21 extracts the reading data and outputs it to the reading sentence creation unit 24. The reading sentence creation unit 24 can acquire data for creating sentence data for voice reading without performing the operation of the graphics recognition unit 23.

### (Second Embodiment)

A second embodiment of the present invention will now be described. The descriptions of the same components as those of the first embodiment shown in FIG. 1 are omitted.

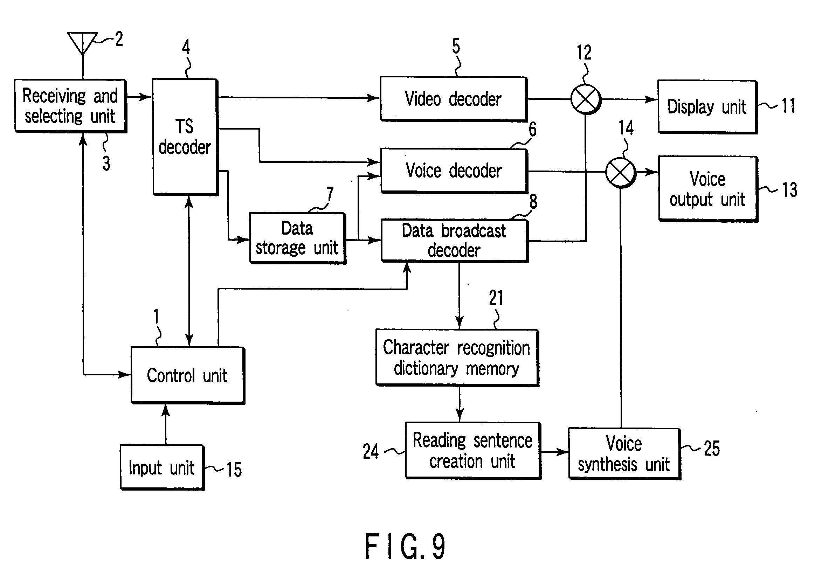

FIG. 9 is a block diagram showing a configuration of a vehicle-mounted broadcast receiving apparatus according to the second embodiment of the present invention. This apparatus includes neither the character recognition dictionary memory 22 nor the graphics recognition unit 23 shown in FIG. 1.

An operation of the vehicle-mounted broadcast receiving apparatus according to the second embodiment will be described.

When a user operates the input unit 15 to set the apparatus in a voice reading mode, the control unit 1 controls the data broadcast decoder 8 to supply the reading element extraction unit 21 with a BML file "news.bml" (see FIG. 3) and a binary table file "news.tbl" (see FIG. 4) included in the data broadcast stream stored in the data storage unit 7.

Upon receiving the binary table file "news.tbl" from the data broadcast decoder 8, the reading element extraction unit 21 extracts character data, " 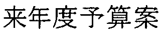 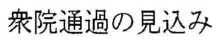 (The House of Representatives will pass the budget for next year)", " 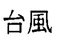 2 1 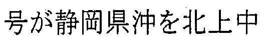 (Typhoon No. 21 is moving north off the coast of Shizuoka Prefecture)" and " 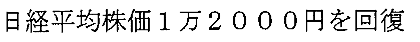 (The Nikkei Stock Average returns to 12,000 yen)" from the binary table file.

Upon receiving the BML file "news.bml" from the data broadcast decoder 8, the reading element extraction unit 21 extracts positional information of character data included in the BML file on the monitor, and supplies the character data and the positional information to the reading sentence creation unit 24.

The reading sentence creation unit 24 acquires the character data and the positional information to create a text file that describes these data and information.

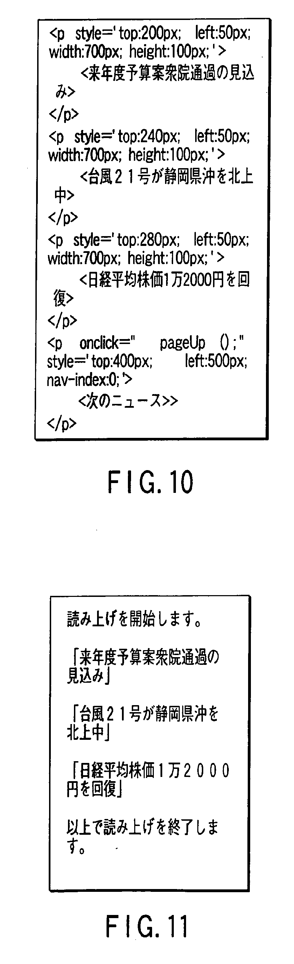

FIG. 10 is a chart showing an example of a text file that describes the character data acquired by the reading sentence creation unit 24 of the vehicle-mounted broadcast receiving apparatus according to the second embodiment of the present invention.

The text file shown in FIG. 10 includes the contents of the text of the news on the monitor display screen shown in FIG. 2. Of the character data described by the text file, " 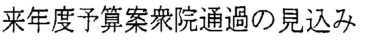 (The House of Representatives will pass the budget for next year)", " 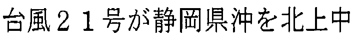 (Typhoon No. 21 is moving north off the coast of Shizuoka Prefecture)" and " 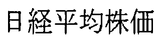 1 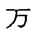 2 0 0 0 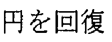 (The Nikkei Stock Average returns to 12,000 yen)" are character data which are included in the binary table file output from the data broadcast decoder 8 and which corresponds to the text of the news.

The text file shown in FIG. 7 describes the display positions of the character data, which are element of the screen. The reading sentence creation unit 24 arranges the character data from the upper left to the lower right on the screen in accordance with the descriptions of the display positions to thereby create sentence data for voice reading. However, the unit 24 does not include " 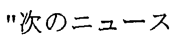 > (next news >)" in the sentence data for voice reading.

The voice synthesis unit 25 converts the sentence data into voice data and supplies it to the voice output unit 13 through the voice mixing unit 14.

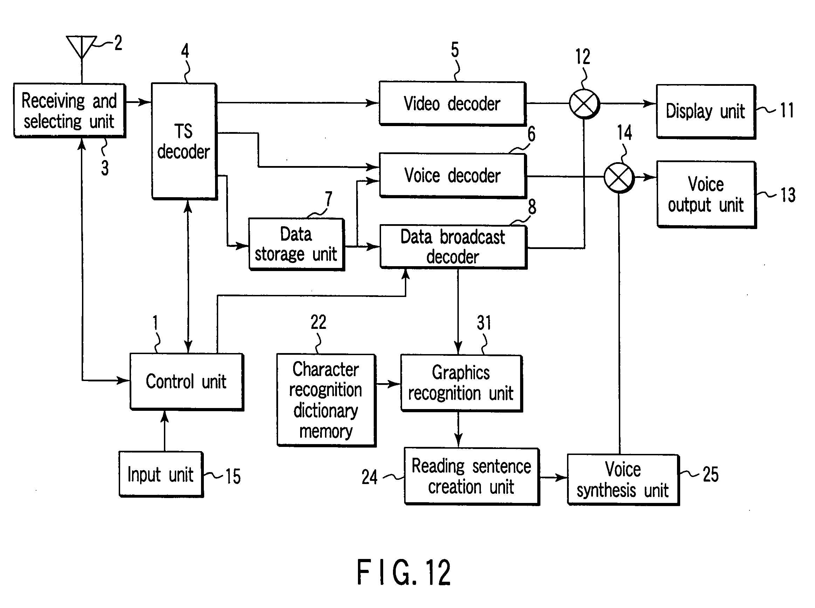

FIG. 11 is a chart showing in the form of characters the contents of voice data read by the voice synthesis unit 25 of the vehicle-mounted broadcast receiving apparatus according to the second embodiment of the present invention.

As described above, the character data included in data broadcast is converted into voice and the voice is output. A user can thus understand the contents of the data broadcast even though he or she cannot see the display unit 11 while driving.

### (Third Embodiment)

A third embodiment of the present invention will now be described. The descriptions of the same components as those of the first embodiment shown in FIG. 1 are omitted.

FIG. 12 is a block diagram showing a configuration of a vehicle-mounted broadcast receiving apparatus according to the third embodiment of the present invention. This apparatus does not include the reading element extraction unit 21 shown in FIG. 1 but a graphics recognition unit 31 in place of the graphics recognition unit 23 shown in FIG. 1.

The data broadcast decoder 8 of the vehicle-mounted broadcast receiving apparatus has a function of decoding a data broadcast stream read out of the data storage unit 7 to generate image data of the entire output screen and then supply it to the graphics recognition unit 31. The image data of the entire output screen is an image of the output screen of the display unit 11 as shown in FIG. 2.

The graphics recognition unit 31 has a function of collating the image of the entire output screen with the definition files of the graphics recognition dictionary to retrieve reading data of graphics patterns included in the image.

An operation of the vehicle-mounted broadcast receiving apparatus according to the third embodiment will be described.

When a user operates the input unit 15 to set the apparatus in a voice reading mode, the control unit 1 controls the data broadcast decoder 8 to generate image data of the entire output screen of data broadcast, based on the BML file "news.bml" (see FIG. 3), binary table file "news.tbl" (see FIG. 4) and graphics files "title.png" and "weather.png" included in the data broadcast stream stored in the data storage unit 7, and output the image data to the graphics recognition unit 31.

Upon receiving the image data of the entire output screen from the data broadcast decoder 8, the graphics recognition unit 31 extracts the graphics patterns from the image data. Unlike in the first embodiment, the character data described in the binary file is extracted as a graphics pattern.

When the screen output to the display unit 11 is the screen shown in FIG. 2, the image of the output screen includes not only the foregoing graphics patterns, " 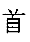 ", " 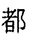 ", " 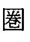 ", " 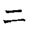 ", " 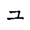 ", "―" and " 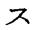 " and " 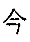 ", " 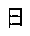 ", " 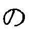 ", " 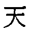 ", " 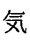 ", ":", "(fair weather mark)", "/" and "(cloudy weather mark)", but also the graphics patterns corresponding to the text of the news, " 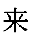 ", " 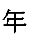 ", " 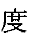 ", " 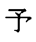 ", " 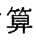 ", " 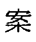 ", " 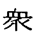 ", " 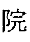 ", " 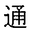 ", " 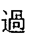 ", " 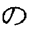 ", " 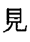 ", " 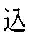 " and " 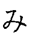 ", " 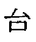 ", " 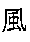 ", "2", "1", " 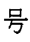 ", " 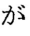 ", " 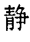 ", " 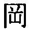 ", " 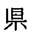 ", " 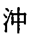 ", " 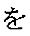 ", " 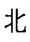 ", " 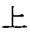 " and " 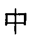 ", " 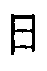 ", " 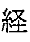 ", " 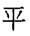 ", " 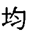 ", " 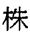 ", " 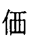 ", "1", " 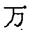 ", "2", "0", "0", "0", " 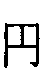 ", " 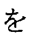 ", " 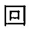 " and " 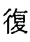 ", and " 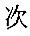 ", " 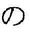 ", " 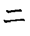 ", " 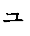 ", "―", " 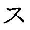 " and " >".

The graphics recognition unit 31 collates the extracted graphics patterns with the definition files of the graphics recognition dictionary shown in FIGS. 5 and 6 to retrieve reading data of the graphics patterns included in the image of the output screen. Further, the graphics recognition unit 31 acquires positional information of the graphics patterns included in the image of the output screen and supplies the positional information and the retrieved reading data to the reading sentence creation unit 24.

The reading sentence creation unit 24 creates a text file that describes the reading data retrieved by the graphics recognition unit 31 and the positional information acquired by the unit 31. The contents of the text file are the same as those shown in FIG. 7.

The voice synthesis unit 25 converts the text file into voice data and supplies it to the voice output unit 13 through the voice mixing unit 14. The contents of the voice data are the same as those shown in FIG. 8.

As described above, graphics patterns are extracted from the image of the entire output screen included in data broadcast, and reading data of the graphics patterns is retrieved. The reading data and the character data are converted into voice data, and the voice data is output. Therefore, even though information indicative of a news title and a weather forecast is included in the images represented by the graphics files, it can be output by voice. Without the reading element extraction unit 21 of the first embodiment, information indicative of the text of the news can be output by voice. A user can understand the contents of data broadcast sufficiently without seeing any monitor screen.

### (Fourth Embodiment)

A fourth embodiment of the present invention will now be described. A vehicle-mounted broadcast receiving apparatus according to the fourth embodiment has almost the same configuration as that of the apparatus shown in FIG. 1 and thus its descriptions are omitted.

In each of the vehicle-mounted broadcast receiving apparatuses according to the first to third embodiments, whenever a display screen is updated, voice-readable information included in the updated display screen is all converted into voice data through the retrieval of reading data, and the voice data is output. Even though the amount of textual information of news to be displayed is large and the item " 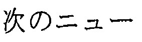 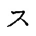 > (next news >)" (see FIG. 2) is selected to update only the text of the news in the display screen, all the other information included in the updated display screen is considered to be new information, and voice-readable information of the new information is all converted into voice data and the voice data is output.

Assume that the information of the display screen includes information, such as a news title and a weather forecast, which does not vary even after the item " 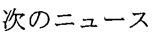 > (next news 〉)" (see FIG. 2) is selected. If all the voice-readable information of the display screen is converted into voice data as described above, the voice data having the same contents will be repeated. This problem can be resolved by the apparatus according to the fourth embodiment.

When information displayed on the display screen of the display unit 11 is updated, if voice-readable information included in the updated information is the same as that of the previous information displayed on the display screen, the reading sentence creation unit 24 does not include the information in the sentence data for voice reading.

An operation of the vehicle-mounted broadcast receiving apparatus according to the fourth embodiment of the present invention will be described.

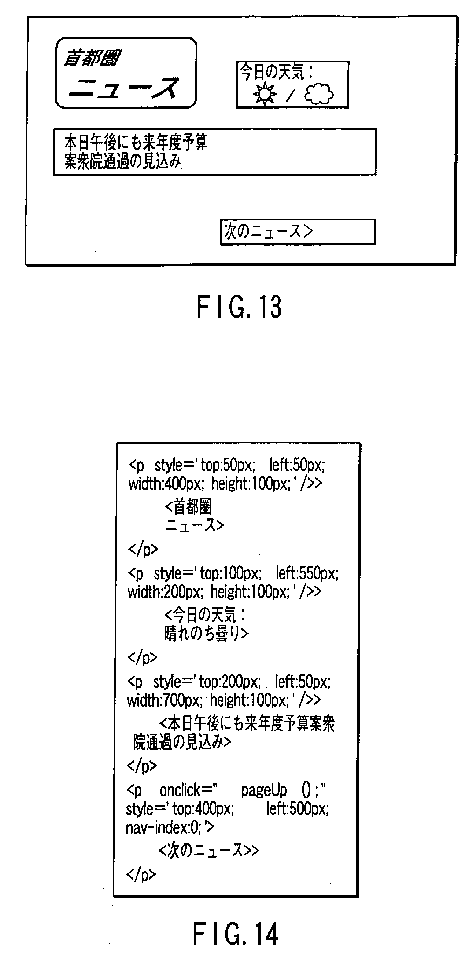

FIG. 13 is a chart showing an example of a first display screen displayed on the display unit 11 of the vehicle-mounted broadcast receiving apparatus.

FIG. 14 is a chart showing an example of a text file that describes voice-readable information in the first display screen which is acquired by the reading sentence creation unit 24 of the vehicle-mounted broadcast receiving apparatus. The text file shown in FIG. 14 includes information of the tile of news, a weather forecast and the contents of the text of the news in the first display screen shown in FIG. 13 and information of their display positions.

The reading sentence creation unit 24 creates sentence data for voice reading in accordance with the character data, reading data of graphics patterns and their display position information, which are described in the text file shown in FIG. 14, and outputs the sentence data to the voice synthesis unit 25. If, however, the text file includes a description " 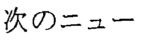 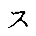 > (next news >)", the reading sentence creation unit 24 does not include the message " 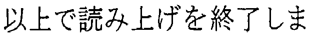 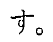 (We finish reading.)" in the sentence data for voice reading.

The reading sentence creation unit 24 holds the contents of the text file (see FIG. 14) described above. The control unit 1 issues the data broadcast decoder 8 with an event (onclick = "pageUp ();") associated with " 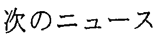 > (next news >)" in the text file shown in FIG. 14. The data broadcast decoder 8 is controlled by the control unit 1 to perform the following operation. Of the character data that is defined by the binary table file (see FIG. 4) and not displayed on the monitor, character data for one sentence, which is to be displayed on a second display screen corresponding to the updated first display screen, is reflected in the BML file, and the contents of the second display screen are displayed on the display screen 11. In the fourth embodiment, the number of texts of the news displayed on the display unit 11 is one.

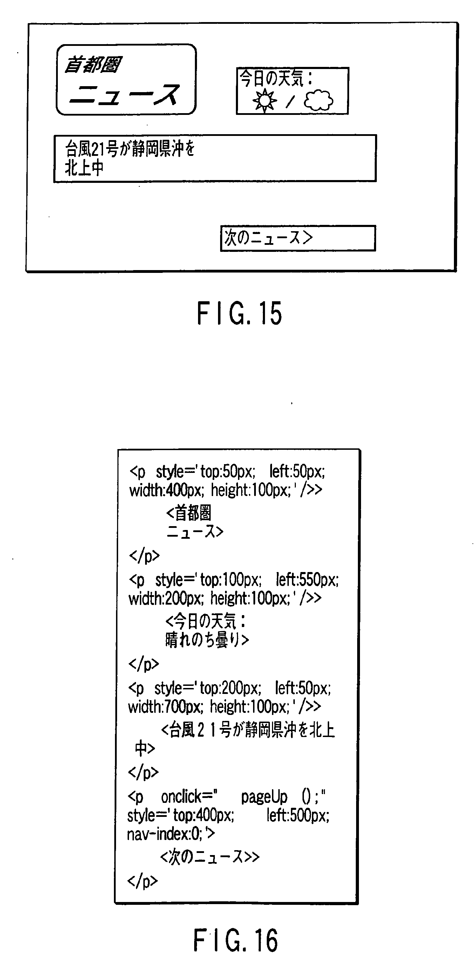

The reading sentence creation unit 24 acquires reading data of graphics patterns included in the images represented by character data and graphics files corresponding to the contents (see FIG. 15) displayed on the second display screen, from the reading element extraction unit 21 and graphics recognition unit 23, thereby creating a text file that describes the acquired reading data.

FIG. 15 is a chart showing an example of the second display screen displayed on the display unit 11 of the vehicle-mounted broadcast receiving apparatus according to the fourth embodiment. The second display screen is displayed by the control unit 1 that automatically issues an event (onclick = "pageUp ();") associated with " 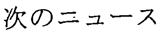 > (next news >)" in the first display screen.

FIG. 16 is a chart showing an example of a text file that describes voice-readable information in the second display screen which is acquired by the reading sentence creation unit 24 of the vehicle-mounted broadcast receiving apparatus. The text file shown in FIG. 16 includes information of the tile of news, a weather forecast and the contents of the text of the news in the second display screen shown in FIG. 15 and information of their display positions.

The reading sentence creation unit 24 compares the text file associated with the first display screen (see FIG. 13) and the text file associated with the second display screen (see FIG. 15), and supplies the voice synthesis unit 25 with reading data of character data and graphics images described in the text file associated with the first display screen as first sentence data. Of the reading data of character data and graphics patterns described in the text file associated with the second display screen, the reading data of character data and graphics patterns that has been described in the text file associated with the first display screen is not considered to be sentence data for voice reading, but the character data " 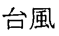 2 1 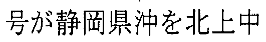 (Typhoon No. 21 is moving north off the coast of Shizuoka Prefecture)" which is first described in the text file associated with the second display screen, is supplied from the reading sentence creation unit 24 to the voice synthesis unit 25 as an addition to the sentence data for voice reading.

The voice synthesis unit 25 sequentially converts the sentence data supplied from the reading sentence creation unit 24 into voice data.

When the display screen is updated, the reading sentence creation unit 24 does not consider the same contents of the display screen currently displayed on the display unit as those of the previous display screen to be sentence data for voice reading, but has only to supply the voice synthesis unit 25 with only the data that is described first in the text file corresponding to the current display screen as an addition to the sentence data for voice reading.

When the text file corresponding to the current display screen describes " 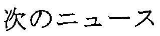 > (next news >)", the reading sentence creation unit 24 determines that there is no more data to be displayed and supplies the voice synthesis unit 25 with message data " 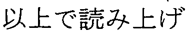 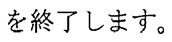 (We finish reading.)" as the final addition to the sentence data for voice reading.

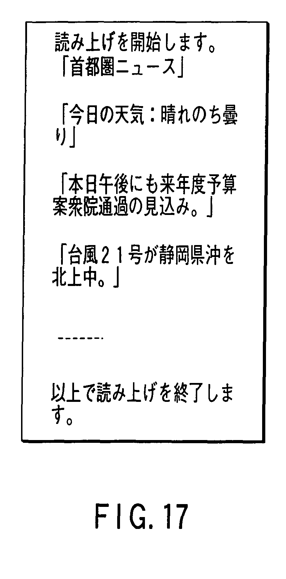

FIG. 17 is a chart showing in the form of characters the contents of voice data generated by the voice synthesis unit 25 of the vehicle-mounted broadcast receiving apparatus according to the fourth embodiment of the present invention. FIG. 17 shows the contents of voice data corresponding to the display contents of the display screen updated in sequence as described above. The voice data of a news title and a weather forecast, which does not change even though the display screen is updated, is output only once, as shown in FIG. 17. Even if there is character data or graphics files to be displayed after the display screen for data broadcast is updated many times, the displayed contents are not output by voice. Therefore, the same contents are not repeatedly output by voice.

Of the functions of the apparatus according to the fourth embodiment, the functions other than the reading sentence creation unit 24 are the same as those of the apparatus according to the first embodiment. They can also be the same as those of the apparatuses according to the second and third embodiments.

Assume that the functions other than the reading sentence creation unit 24 are the same as those of the vehicle-mounted broadcast receiving apparatus according to the third embodiment. The output screen image of the first display screen is output from the data broadcast decoder 8 to the graphics recognition unit 31, and the reading data of graphics patterns included in the output screen image is output to the reading sentence creation unit 24. Thus, the unit 24 creates and holds a text file as shown in FIG. 14.

The output screen image of the first display screen, which is displayed on the updated second display screen, is output to the graphics recognition unit 31, and the reading data of graphics patterns included in the output screen image is output to the reading sentence creation unit 24. The unit 24 creates a text file as shown in FIG. 16 and compares it with the text file shown in FIG. 14. Then, the unit 24 supplies the voice synthesis unit 25 with only the data first described in the text file shown in FIG. 16 as sentence data for voice reading.

The present invention has been described as being applied to a vehicle-mounted broadcast receiving apparatus. It is not limited to this but can be applied to, for example, a home broadcast receiving apparatus. In this case, visually impaired persons can understand the contents of data broadcast sufficiently.

In the foregoing embodiments, the positional information of character data and image data for data broadcast is described in the BML file. The present invention is not limited to the BML file. The BML file can be replaced with a multimedia home platform (MHP) which is the data broadcast standards developed by the Digital Video Broadcasting (DVB) of the European standards group.

## Claims

1. A digital broadcast receiving apparatus, **characterized by** comprising:
a receiving and selecting unit (3) which receives and selects a digital broadcast wave;
an acquisition unit (4, 8) which decodes a data broadcast stream included in the received and selected digital broadcast wave and acquiring character data and image data for data broadcast;
a memory unit (22) which stores graphics patterns and reading data of the graphics patterns;
a unit (23) which collates the acquired image data with information stored in the storage memory (22) and retrieves reading data of graphics patterns included in the image data;
a unit (24) which creates sentence data for voice reading based on the acquired character data and the retrieved reading data; and
a unit (25) which converts the created sentence data into voice data.

2. A digital broadcast receiving apparatus, **characterized by** comprising:
a receiving and selecting unit (3) which receives and selects a digital broadcast wave;
a unit (4, 8) which decodes a data broadcast stream included in the received and selected digital broadcast wave and acquiring character data for data broadcast;
a unit (24) which creates sentence data for voice reading based on the acquired character data; and
a unit (25) which converts the created sentence data into voice data.

3. A digital broadcast receiving apparatus, **characterized by** comprising:
a receiving and selecting unit (3) which receives and selects a digital broadcast wave;
a unit (4, 8) which decodes a data broadcast stream included in the received and selected digital broadcast wave and forms an image of an entire output screen of data broadcast;
a memory unit (22) which stores graphics patterns and reading data of the graphics patterns;
a unit (31) which collates the formed image with information stored in the memory unit (22) and retrieves reading data of graphics patterns included in the formed image data;
a unit (24) which creates sentence data for voice reading based on the retrieved reading data; and
a unit (25) which converts the created sentence data into voice data.

4. The digital broadcast receiving apparatus according to one of claims 1 and 3, **characterized in that** the graphics patterns stored in the memory unit (22) correspond to at least characters and also at least one of a pictograph and a symbol.

5. The digital broadcast receiving apparatus according to one of claims 1 and 3, **characterized in that** the memory unit (22) stores graphics patterns and reading data of the graphics patterns for each of display forms of the graphics patterns, and selects or uses by priority a storage unit of graphics patterns corresponding to display forms used in the data broadcast stream.

6. The digital broadcast receiving apparatus according to one of claims 1 and 3, **characterized in that** the received and selected broadcast wave includes a voice stream and a data broadcast voice stream included in the data broadcast stream, and the apparatus further comprises a unit (14) which mixes voice data generated by decoding the voice stream and the data broadcast voice stream and voice data into which the sentence data for voice reading is converted.

7. The digital broadcast receiving apparatus according to claim 1, **characterized in that** when at least one of the character data and the image data for data broadcast acquired by the acquisition unit (8) is updated, the sentence creation unit (24) creates sentence data for voice reading based on data included in the updated data, which differs from previous data not updated.

8. The digital broadcast receiving apparatus according to claim 2, **characterized in that** when the character data for data broadcast acquired by the acquisition unit (8) is updated, the sentence creation unit (24) creates sentence data for voice reading based on data included in the updated data, which differs from previous data not updated.

9. The digital broadcast receiving apparatus according to claim 3, **characterized in that** when the image of the entire output screen formed by the image forming unit (8) is updated, the sentence creation unit (24) creates sentence data for voice reading based on reading data of a graphics pattern included in the updated image, which differs from the graphics patterns included in the previous image not updated.

10. A digital broadcast receiving apparatus, **characterized by** comprising:
a receiving and selecting unit (3) which receives and selects a digital broadcast wave;
a unit (4, 8) which decodes a data broadcast stream included in the received and selected digital broadcast wave and acquiring reading data of at least image data included in information obtained by decoding the data broadcast stream;
a unit (24) which creates sentence data for voice reading based on the acquired reading data; and
a unit (25) which converts the created sentence data into voice data.

11. The digital broadcast receiving apparatus according to claim 1, **characterized in that** the sentence creation unit (24) creates the sentence data for voice reading in sequence determined based on at least one of a display form, a display size and a display position of graphics patterns included in the acquired character data and image data for data broadcast.

12. The digital broadcast receiving apparatus according to claim 2, **characterized in that** the sentence creation unit (24) creates the sentence data for voice reading in sequence determined based on at least one of a display form, a display size and a display position of the acquired character data for data broadcast.

13. The digital broadcast receiving apparatus according to claim 3, **characterized in that** the sentence creation unit (24) creates the sentence data for voice reading in sequence determined based on at least one of a display form, a display size and a display position of the graphics patterns included in the formed image.
